# EUROPEAN PATENT APPLICATION

(11) **EP 4 331 405 A1**
(43) Date of publication of application: **06.03.2024**
(21) Application number: 22916406.6
(22) Date of filing: 10.11.2022
(51) Int. Cl.: A24F 40/40, B01D 35/02, B01D 46/00, A24F 40/50, A24F 40/46, A24F 7/00, A24F 40/485, A24F 40/20

(54) **AEROSOL GENERATION DEVICE FOR REDUCING SMELL OF MAINSTREAM SMOKE**

(30) Priority: 30.12.2021 KR 20210192515
(71) Applicant: KT & G Corporation, Daejeon 34337 (KR)
(72) Inventor: JEOUNG, Eun Mi, Daejeon 34128 (KR); KIM, Na Yeon, Daejeon 34128 (KR); KIM, Su In, Daejeon 34128 (KR); CHO, Danbi, Daejeon 34128 (KR)
(74) Representative: Ter Meer Steinmeister & Partner
(86) International application number: PCT/KR2022/017600
(87) International publication number: WO 2023/128252

(57) **Abstract**

An aerosol generating device that reduces the odor of mainstream smoke according to various embodiments may include a battery configured to supply power, a controller configured to control an operation of the aerosol generating device, a heater configured to heat an aerosol generating article accommodated in the aerosol generating device, and a filtering member configured to inhale mainstream smoke exhaled by a user, filter out an odor and a toxic material from the mainstream smoke, and discharge the odor and the toxic material to the outside.

## Description

### Technical Field

The following embodiments relate to an aerosol generating device that reduces the odor of mainstream smoke.

### Background Art

Recently, demands for alternative articles to overcome disadvantages of general cigarettes have increased. For example, there is an increasing demand for a device (e.g., a cigarette-type electronic cigarette) that generates an aerosol by electrically heating a cigarette stick. Accordingly, research on an electrically heating-type aerosol generating device and a cigarette stick (or an aerosol generating article) applied thereto is being actively conducted. For example, Korean Patent Application Publication No. 10-2017-0132823 discloses a non-combustion type flavor inhaler, a flavor inhalation component source unit, and an atomizing unit.

### Disclosure of the Invention

### Technical Goals

According to various embodiments, an aerosol generating device that reduces the odor of mainstream smoke may be provided.

### Technical Solutions

An aerosol generating device that reduces an odor of mainstream smoke according to various embodiments includes a battery configured to supply power, a controller configured to control an operation of the aerosol generating device, a heater configured to heat an aerosol generating article accommodated in the aerosol generating device, and a filtering member configured to inhale mainstream smoke exhaled by a user, filter out an odor and a toxic material from the mainstream smoke, and discharge the odor and the toxic material to the outside.

According to an embodiment, the filtering member may include a mouthpiece through which the mainstream smoke enters, a main path pipe disposed in contact with the mouthpiece and through which the mainstream smoke flows, a sub path pipe through which mainstream smoke that is purified by a filter unit flows, and a filter unit that is disposed between the main path pipe and the sub path pipe and that is configured to filter out an odor and a toxic material of the mainstream smoke.

According to an embodiment, the main path pipe may extend to an opposite side of a side in contact with the mouthpiece, and the sub path pipe may surround an outside of the main path pipe and extend parallel to the main path pipe to the opposite side of the side in contact with the mouthpiece.

According to an embodiment, the main path pipe may include a plurality of openings.

According to an embodiment, the plurality of openings may be regularly disposed in a longitudinal direction in a surface of the main path pipe.

According to an embodiment, the plurality of openings may extend in a longitudinal direction of an outer surface of the main path pipe.

According to an embodiment, the plurality of openings may be disposed in a surface of the main path pipe while being biased in a direction adjacent to the mouthpiece.

According to an embodiment, the filter unit may be replaceable.

According to an embodiment, the filtering member may be configured to transfer the mainstream smoke from a downstream end of the aerosol generating device to an upstream end of the aerosol generating device.

An aerosol generating device that reduces an odor of mainstream smoke according to various embodiments includes a battery configured to supply power, a controller configured to control an operation of the aerosol generating device, a heater configured to heat an aerosol generating article accommodated in the aerosol generating device, and a filtering member configured to inhale mainstream smoke exhaled by a user, filter out an odor and a toxic material from the mainstream smoke, and discharge the odor and the toxic material to the outside, wherein the filtering member includes a first flow path along which mainstream smoke before purification flows, a second flow path along which mainstream smoke after purification flows, and a filter unit configured to purify the mainstream smoke between the first flow path and the second flow path.

### Effects

An aerosol generating device that reduces the odor of mainstream smoke according to various embodiments may reduce the odor of mainstream smoke. The effects of the aerosol generating device that reduces the odor of mainstream smoke according to various embodiments may not be limited to the above-mentioned effects, and other unmentioned effects may be clearly understood from the following description by one of ordinary skill in the art.

### Brief Description of Drawings

FIGS. 1A to 1C are diagrams illustrating examples of a cigarette inserted into an aerosol generating device according to various embodiments.
FIG. 2A illustrates an aerosol generating device that reduces the odor of mainstream smoke according to an embodiment.
FIG. 2B schematically illustrates a transverse cross-section of a filtering member of an aerosol generating device according to an embodiment.
FIGS. 3 and 4 schematically illustrate longitudinal cross-sections of a filtering member of an aerosol generating device according to various embodiments.
FIG. 5 illustrates an aerosol generating device that reduces the odor of mainstream smoke according to another embodiment.

### Best Mode for Carrying Out the Invention

The terms used in various embodiments are selected from among common terms that are currently widely used, in consideration of their function in the disclosure. However, the terms may become different according to an intention of one of ordinary skill in the art, a precedent, or the advent of new technology. Also, in particular cases, the terms are discretionally selected by the applicant of the disclosure, and the meaning of those terms will be described in detail in the corresponding part of the detailed description. Therefore, the terms used in the disclosure are not merely designations of the terms, but the terms are defined based on the meaning of the terms and content throughout the disclosure.

It will be understood that when a certain part "includes" a certain component, the part does not exclude another component but may further include another component, unless the context clearly dictates otherwise. Also, terms such as "unit," "module," etc., as used in the specification may refer to a part for processing at least one function or operation and may be implemented as hardware, software, or a combination of hardware and software.

Hereinbelow, embodiments of the present disclosure will be described in detail with reference to the accompanying drawings so that the embodiments may be readily implemented by one of ordinary skill in the art to which the present disclosure pertains. However, the present disclosure may be implemented in many different forms and is not limited to the embodiments described herein.

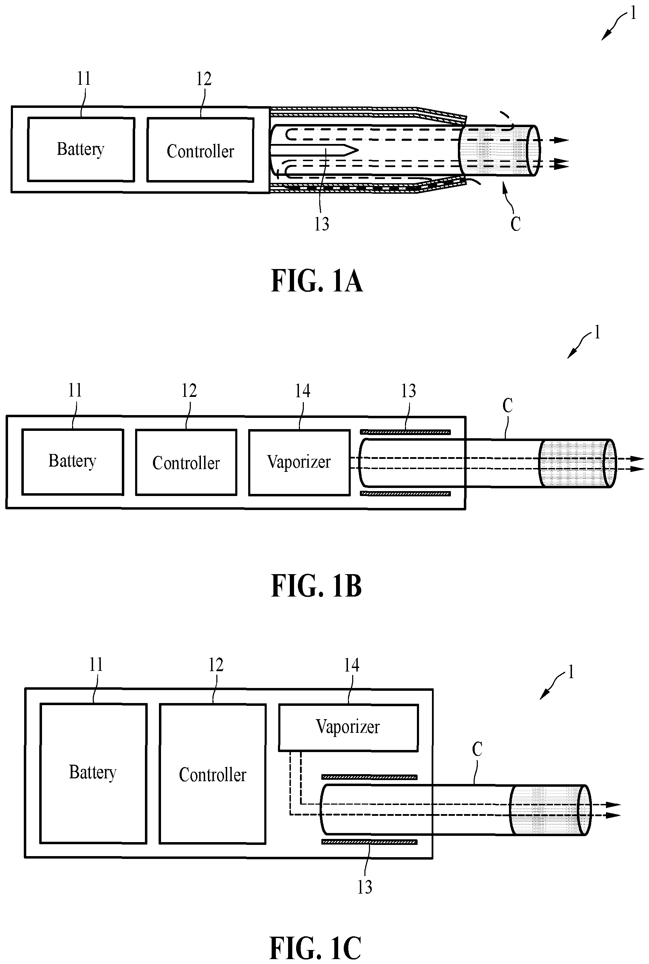

In the following embodiments, the terms "upstream" or "upstream direction" may refer to a direction away from the mouth of a user (smoker) and the terms "downstream" or "downstream direction" may refer to a direction toward the mouth of the user. The terms "upstream" and "downstream" may be used to describe relative positions of components of an aerosol generating article. For example, in an aerosol generating device 1 illustrated in FIG. 1B, a battery 11 is located upstream of or in the upstream direction of a controller 12, and the controller 12 is located downstream of or in the downstream direction of the battery 11.

In the following embodiments, the term "puff" refers to inhalation by a user, and inhalation refers to a situation in which a user draws in an aerosol into the oral cavity, nasal cavity, or lungs through the mouth or nose.

In the following embodiments, "mainstream smoke" refers to smoke and/or an aerosol that is directly inhaled into the mouth of a user when the user inhales through an aerosol generating article and/or cigarette, and "sidestream smoke" refers to smoke and/or an aerosol that is directly generated in a burning portion of the aerosol generating article and/or cigarette. In general, "sidestream smoke" contains more harmful components than "mainstream smoke."

Hereinafter, embodiments of the disclosure will be described in detail with reference to the drawings.

FIGS. 1A to 1C are diagrams illustrating examples of a cigarette inserted into an aerosol generating device.

Referring to FIG. 1A, the aerosol generating device 1 may include the battery 11, the controller 12, and a heater 13. Referring to FIGS. 1B and 1C, the aerosol generating device 1 may further include a vaporizer 14. In addition, a cigarette C may be inserted into the inner space of the aerosol generating device 1.

The aerosol generating device 1 shown in FIGS. 1A to 1C may include components related to an embodiment described herein. Therefore, it is to be understood by one of ordinary skill in the art to which the present disclosure pertains that the aerosol generating device 1 may further include other general-purpose components in addition to the components shown in FIGS. 1A to 1C.

In addition, although it is shown that the heater 13 is included in the aerosol generating device 1 in FIGS. 1B and 1C, the heater 13 may be omitted as needed.

FIG. 1A illustrates a linear alignment of the battery 11, the controller 12, and the heater 13. In addition, FIG. 1B illustrates a linear alignment of the battery 11, the controller 12, the vaporizer 14, and the heater 13. In addition, FIG. 1C illustrates a parallel alignment of the vaporizer 14 and the heater 13. However, the internal structure of the aerosol generating device 1 is not limited to the illustration in FIGS. 1A to 1C. That is, the alignments of the battery 11, the controller 12, the heater 13, and the vaporizer 14 may be changed depending on the design of the aerosol generating device 1.

When the cigarette C is inserted into the aerosol generating device 1, the aerosol generating device 1 may operate the heater 13 and/or the vaporizer 14 to generate an aerosol. The aerosol generated by the heater 13 and/or the vaporizer 14 may pass through the cigarette C and be transferred to the user.

Even when the cigarette C is not inserted into the aerosol generating device 1, the aerosol generating device 1 may heat the heater 13, as needed.

The battery 11 may supply power to be used to operate the aerosol generating device 1. For example, the battery 11 may supply power to heat the heater 13 or the vaporizer 14 and may supply power required for the controller 12 to operate. In addition, the battery 11 may supply power required to operate a display, a sensor, a motor, or the like installed in the aerosol generating device 1.

The controller 12 may control the overall operation of the aerosol generating device 1. Specifically, the controller 12 may control respective operations of other components included in the aerosol generating device 1, in addition to the battery 11, the heater 13, and the vaporizer 14. In addition, the controller 12 may verify a state of each of the components of the aerosol generating device 1 to determine whether the aerosol generating device 1 is in an operable state.

The controller 12 may include at least one processor. The processor may be implemented as an array of a plurality of logic gates or may be implemented as a combination of a general-purpose microprocessor and a memory in which a program executable by the microprocessor is stored. In addition, it is to be understood by one of ordinary skill in the art to which the present disclosure pertains that the processor may be implemented in other types of hardware.

The heater 13 may be heated by power supplied by the battery 11. For example, when a cigarette is inserted into the aerosol generating device 1, the heater 13 may be disposed outside the cigarette. The heated heater 13 may thus raise the temperature of an aerosol generating material in the cigarette.

The heater 13 may be an electrically resistive heater. For example, the heater 13 may include an electrically conductive track, and the heater 13 may be heated as a current flows through the electrically conductive track. However, the heater 13 is not limited to the above-described example, and any example of heating the heater 13 up to a desired temperature may be applicable without limitation. Here, the desired temperature may be preset in the aerosol generating device 1 or may be set by the user.

In another example, the heater 13 may be an induction heater. Specifically, the heater 13 may include an electrically conductive coil for heating the cigarette C in an inductive heating manner, and the cigarette C may include a susceptor to be heated by the induction heater.

For example, the heater 13 may include a tubular heating element, a plate-shaped heating element, a needle-shaped heating element, or a rod-shaped heating element and may heat the inside or outside of a cigarette C according to the shape of a heating element.

In addition, the heater 13 may be provided as a plurality of heaters in the aerosol generating device 1. In this case, the heaters may be disposed to be inserted into the cigarette C or may be disposed outside the cigarette C. In addition, some (e.g., the heater 13) of the heaters may be disposed to be inserted into the cigarette C, and the rest may be disposed outside the cigarette C. In addition, the shape of the heater 13 is not limited to the shape shown in FIGS. 1A to 1C and may be manufactured in various shapes.

The vaporizer 14 may heat a liquid composition to generate an aerosol, and the generated aerosol may pass through the cigarette C to be transferred to the user. That is, the aerosol generated by the vaporizer 14 may travel along an airflow path of the aerosol generating device 1, and the airflow path may be configured such that the aerosol generated by the vaporizer 14 may pass through the cigarette C to be transferred to the user.

For example, the vaporizer 14 may include a liquid storage, a liquid transfer means, and a heating element. However, embodiments are not limited thereto. For example, the liquid storage, the liquid transfer means, and the heating element may be included as independent modules in the aerosol generating device 1.

The liquid storage may store the liquid composition. The liquid composition may be, for example, a liquid including a tobacco-containing material that includes a volatile tobacco flavor component or a liquid including a non-tobacco material. The liquid storage may be manufactured to be detachable from and attachable to the vaporizer 14 or may be manufactured in an integral form with the vaporizer 14.

The liquid composition may include, for example, water, a solvent, ethanol, a plant extract, a fragrance, a flavoring agent, or a vitamin mixture. The fragrance may include, for example, menthol, peppermint, spearmint oil, various fruit flavored ingredients, and the like. However, embodiments are not limited thereto. The flavoring agent may include ingredients that provide the user with a variety of flavors or scents. The vitamin mixture may be a mixture of at least one of vitamin A, vitamin B, vitamin C, or vitamin E. However, embodiments are not limited thereto. The liquid composition may also include an aerosol former such as glycerin and propylene glycol.

The liquid transfer means may transfer the liquid composition in the liquid storage to the heating element. The liquid transfer means may be, for example, a wick such as cotton fiber, ceramic fiber, glass fiber, or porous ceramic. However, embodiments are not limited thereto.

The heating element may be an element for heating the liquid composition transferred by the liquid transfer means. The heating element may be, for example, a metal heating wire, a metal heating plate, a ceramic heater, or the like. However, embodiments are not limited thereto. In addition, the heating element may include a conductive filament such as a nichrome wire and may be arranged in a structure wound around the liquid transfer means. The heating element may be heated as a current is supplied and may transfer heat to the liquid composition in contact with the heating element, and may thereby heat the liquid composition. As a result, an aerosol may be generated.

For example, the vaporizer 14 may also be referred to as a cartomizer or an atomizer. However, embodiments are not limited thereto.

Meanwhile, the aerosol generating device 1 may further include general-purpose components in addition to the battery 11, the controller 12, the heater 13, and the vaporizer 14. The aerosol generating device 1 may include, for example, a display that outputs visual information and/or a motor that outputs tactile information. In addition, the aerosol generating device 1 may include at least one sensor (e.g., a puff sensor, a temperature sensor, a cigarette insertion detection sensor, etc.). In addition, the aerosol generating device 1 may be manufactured to have a structure in which external air may be introduced or internal gas may flow out even in a state in which the cigarette C is inserted.

Although not shown in FIGS. 1A to 1C, the aerosol generating device 1 may constitute a system along with a separate cradle. For example, the cradle may be used to charge the battery 11 of the aerosol generating device 1. Alternatively, the heater 13 may be heated in a state in which the cradle is coupled to the aerosol generating device 1.

The cigarette C may be similar to a general combustion type cigarette. For example, the cigarette C may be divided into a first portion including an aerosol generating material and a second portion including a filter or the like. Alternatively, the second portion of the cigarette C may also include the aerosol generating material. For example, the aerosol generating material provided in the form of granules or capsules may be inserted into the second portion.

The first portion may be entirely inserted into the aerosol generating device 1, and the second portion may be exposed outside. Alternatively, only a part of the first portion may be inserted into the aerosol generating device 1, or the entirety of the first portion and a part of the second portion may be inserted into the aerosol generating device 1. The user may inhale the aerosol with the second portion in a mouth of the user. In this case, the aerosol may be generated as external air passes through the first portion, and the generated aerosol may pass through the second portion and be transferred into the mouth of the user.

For example, the external air may be introduced through at least one air path formed in the aerosol generating device 1. In this example, the opening or closing and/or the size of the air path formed in the aerosol generating device 1 may be adjusted by the user. Accordingly, the amount of atomization, the sense of smoking, or the like may be adjusted by the user. In another example, the external air may be introduced into the inside of the cigarette C through at least one hole formed in the surface of the cigarette C.

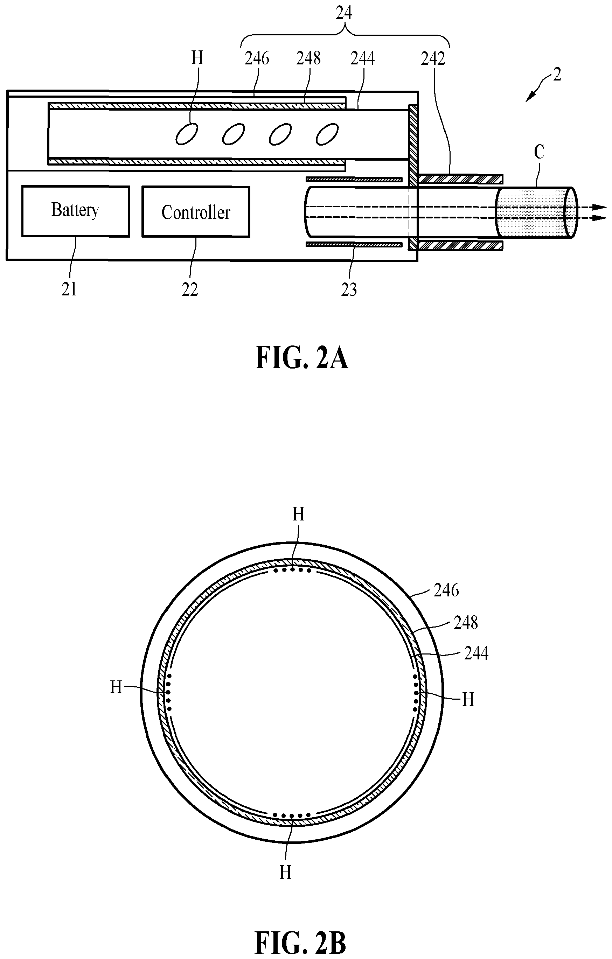

Hereinafter, an aerosol generating device that reduces the odor of mainstream smoke is described in detail with reference to FIGS. 2A to 5.

FIG. 2A illustrates an aerosol generating device 2 that reduces the odor of mainstream smoke according to an embodiment.

Referring to FIG. 2A, the aerosol generating device 2 according to an embodiment may include a battery 21 (e.g., the battery 11 of FIGS. 1A to 1C), a controller 22 (e.g., the controller 12 of FIGS. 1A to 1C), a heater 23 (e.g., the heater 13 of FIGS. 1A to 1C), and a filtering member 24.

In an embodiment, the battery 21, the controller 22, and the heater 23 may be identical or similar to the battery 11, the controller 12, and the heater 13 of the aerosol generating device 1 according to an embodiment.

In an embodiment, the filtering member 24 may filter out an odor and/or a toxic material after mainstream smoke exhaled by a user is inhaled. The filtering member 24 according to an embodiment may filter out the odor and/or the toxic material of the mainstream smoke exhaled by the user and discharge the odor and/or the toxic material to the outside.

Referring to FIG. 2A, in an embodiment, the filtering member 24 may include a mouthpiece 242, a main path pipe 244, a sub path pipe 246, and a filter unit 248. The filtering member 24 according to an embodiment may transfer the mainstream smoke exhaled by the user from the downstream end to the upstream end of the aerosol generating device 2.

In an embodiment, the mouthpiece 242 may be disposed parallel to an elongated cavity (not shown) in which the cigarette C is accommodated. In an embodiment, when the cigarette C is accommodated in the aerosol generating device 2, it may be desirable that the length of the mouthpiece 242 is equal to or less than the length of the cigarette C protruding from an end of the aerosol generating device 2. When the length of the mouthpiece 242 is less than the protruding length of the cigarette C, the user may inhale the aerosol while holding the end of the cigarette C in a mouth and exhale mainstream smoke while holding the mouthpiece 242 in the mouth.

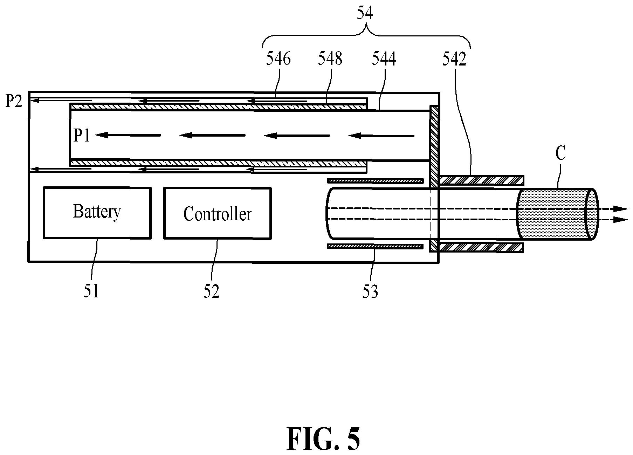

In an embodiment, the main path pipe 244 may form a path (e.g., a first flow path P1 (see FIG. 5)) along which the mainstream smoke that is exhaled by the user and transferred from the mouthpiece 242 primarily flows. The main path pipe 244 according to an embodiment may come into contact with the mouthpiece 242. The main path pipe 244 according to an embodiment may extend to the opposite side of the side in contact with the mouthpiece 242. The main path pipe 244 according to an embodiment may include a plurality of openings H, and the plurality of openings H may be regularly disposed in the longitudinal direction in the surface of the main path pipe 244. A plurality of openings H according to an embodiment may be disposed in the surface of the main path pipe 244 while biased in a direction adjacent to the mouthpiece 242.

In an embodiment, the sub path pipe 246 may form a path (e.g., a second flow path P2 (see FIG. 5)) along which the mainstream smoke transferred from the main path pipe 244 through the plurality of openings H secondarily flows. The sub path pipe 246 according to an embodiment may be formed surrounding the main path pipe 244 and may extend toward the opposite side of the side facing the mouthpiece 242. The sub path pipe 246 according to an embodiment may extend in a direction parallel to the main path pipe 244 according to an embodiment.

In an embodiment, the filter unit 248 may be disposed between the main path pipe 244 and the sub path pipe 246. The filter unit 248 according to an embodiment may filter out an odor and/or a toxic material and a harmful material of the mainstream smoke while the mainstream smoke exhaled by the user is transferred from a first path, along which the mainstream smoke flows through the main path pipe 244, to a second path, along which the mainstream smoke flows through the sub path pipe 246. The filter unit 248 according to an embodiment may include a filter material such as paper, cellulose acetate fibers, HEPA filters, activated carbon, and the like. The filter unit 248 according to an embodiment may include a specially treated material that absorbs only an odor component of the mainstream smoke exhaled by the user. The filter unit 248 according to an embodiment may be replaceable.

FIG. 2B schematically illustrates a transverse cross-section of the filtering member 24 of the aerosol generating device 2 according to an embodiment.

Referring to FIG. 2B, the main path pipe 244 may be disposed at the innermost side of the filtering member 24 according to an embodiment. The sub path pipe 246 may be disposed at the outermost side of the filtering member 24 according to an embodiment. A filter unit 248 may be disposed between the main path pipe 244 and the sub path pipe 246 according to an embodiment. The main path pipe 244 according to an embodiment may include a plurality of openings H disposed at regular intervals along the circumference of the main path pipe 244. Toxic mainstream smoke flowing through the main path pipe 244 may transfer to the sub path pipe 246 through the plurality of openings H, and in the process an odor and/or a toxic material may be filtered out while the mainstream smoke passes through the filter unit 248.

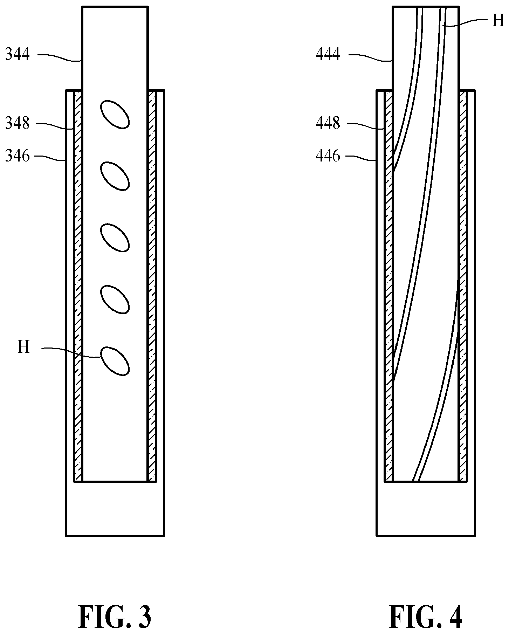

FIGS. 3 and 4 schematically illustrate longitudinal cross-sections of a filtering member (e.g., the filtering member 24 of FIGS. 2A and 2B) of an aerosol generating device according to various embodiments.

Referring to FIG. 3, in an embodiment, a plurality of openings H may be regularly disposed in the longitudinal direction in the surface of the main path pipe 344 (e.g., the main path pipe 244 of FIG. 2A). In an embodiment, the plurality of openings H may have a circular shape, an elliptical shape, or a polygonal shape. However, embodiments are not limited thereto. In an embodiment, when the plurality of openings (H) has an elliptical shape, the major axis of the ellipse may be disposed at an oblique angle to the longitudinal direction of the main path pipe 344. When the major axis of the ellipse is disposed at an oblique angle to the longitudinal direction of the main path pipe 344, mainstream smoke exhaled by a user may form a vortex while moving from the downstream side to the upstream side, thereby easily transferring from the main path pipe 344 to the sub path pipe 346.

Referring to FIG. 4, in an embodiment, the plurality of openings H may extend in the longitudinal direction of the outer surface of the main path pipe 444 (e.g., the main path pipe 244 of FIG. 2A). In an embodiment, the plurality of openings H may extend in the longitudinal direction of the main path pipe 444 forming an oblique angle to the longitudinal direction of the main path pipe 444. When the plurality of openings H extend in the longitudinal direction of the main path pipe 444 forming an oblique angle to the longitudinal direction of the main path pipe 444, the mainstream smoke exhaled by the user may form a vortex while moving from the downstream side to the upstream side, thereby easily transferring from the main path pipe 444 to the sub path pipe 446.

FIG. 5 illustrates an aerosol generating device that reduces the odor of mainstream smoke according to another embodiment.

Referring to FIG. 5, an aerosol generating device 5 (e.g., the aerosol generating device 2 of FIG. 2A) according to another embodiment may include a battery 51 (e.g., the battery 21 of FIG. 2A), a controller 52 (e.g., the controller 22 in FIG. 2A), a heater 53 (e.g., the heater 23 in FIG. 2A), and a filtering member 54 (e.g., the filtering member 24 in FIG. 2A).

The filtering member 54 according to an embodiment may include a mouthpiece 542, a main path pipe 544, a sub path pipe 546, and a filter unit 548. The filtering member 54 according to an embodiment may transfer mainstream smoke exhaled by a user from the downstream end to the upstream end of the aerosol generating device 5. The filtering member 54 according to an embodiment may inhale the mainstream smoke exhaled by the user, filter out an odor and/or a toxic material, and discharge the odor and the toxic material to the outside. The main path pipe 544 according to an embodiment may include a plurality of openings H (e.g., the openings H of FIGS. 2A to 4).

The filtering member 54 according to an embodiment may include a first flow path P1 and a second flow path P2. The first flow path P1 according to an embodiment may be a path along which the mainstream smoke that is exhaled by the user and flown into the filtering member 54 through the mouthpiece 542 flows within the main path pipe 544. The second flow path P2 according to an embodiment may be a path that leads toward the upstream of the aerosol generating device 5 through the sub path pipe 546. The mainstream smoke before purification flowing along the first flow path P1 may pass through the openings H of the main path pipe 544, be purified by the filter unit 548, and flow along the second flow path P2, toward the upstream of the aerosol generating device 5 through the sub path pipe 546. The purified mainstream smoke flowing along the second flow path P2 may be discharged to the outside through the openings included at the end of the second flow path P2.

According to the aerosol generating devices 2 and/or 5 having the structure described above, by discharging mainstream smoke exhaled by the user, which contains a large amount of toxic materials and is a source of odor, to the outside after purifying in the aerosol generating devices 2 and/or 5, it may be possible to reduce the danger of second-hand smoke and discomfort of people around the user of the aerosol generating devices 2 and/or 5.

While the various embodiments are described with reference to a limited number of drawings, it will be apparent to one of ordinary skill in the art that various alterations and modifications in form and details may be made in these embodiments without departing from the spirit and scope of the claims and their equivalents. For example, suitable results may be achieved if the described techniques are performed in a different order and/or if components in a described system, architecture, device, or circuit are combined in a different manner and/or replaced or supplemented by other components or their equivalents.

Therefore, other implementations, other embodiments, and/or equivalents of the claims are within the scope of the following claims.

## Claims

1. An aerosol generating device for reducing an odor of mainstream smoke, the aerosol generating device comprising:
a battery configured to supply power;
a controller configured to control an operation of the aerosol generating device;
a heater configured to heat an aerosol generating article accommodated in the aerosol generating device; and
a filtering member configured to inhale mainstream smoke exhaled by a user, filter out an odor and a toxic material from the mainstream smoke, and discharge the odor and the toxic material to the outside.

2. The aerosol generating device of claim 1, wherein the filtering member comprises:
a mouthpiece through which the mainstream smoke enters;
a main path pipe disposed in contact with the mouthpiece and through which the mainstream smoke flows;
a sub path pipe through which mainstream smoke that is purified by a filter unit flows; and
a filter unit that is disposed between the main path pipe and the sub path pipe and that is configured to filter out an odor and a toxic material of the mainstream smoke.

3. The aerosol generating device of claim 2, wherein
the main path pipe extends to an opposite side of a side in contact with the mouthpiece, and
the sub path pipe surrounds an outside of the main path pipe and extends parallel to the main path pipe to the opposite side of the side in contact with the mouthpiece.

4. The aerosol generating device of claim 2 or 3, wherein the main path pipe comprises a plurality of openings.

5. The aerosol generating device of claim 4, wherein the plurality of openings is regularly disposed in a longitudinal direction in a surface of the main path pipe.

6. The aerosol generating device of claim 4, wherein the plurality of openings extends in a longitudinal direction of an outer surface of the main path pipe.

7. The aerosol generating device of claim 4, wherein the plurality of openings is disposed in a surface of the main path pipe while being biased in a direction adjacent to the mouthpiece.

8. The aerosol generating device of claim 2, wherein the filter unit is replaceable.

9. The aerosol generating device of claim 1, wherein the filtering member is configured to transfer the mainstream smoke from a downstream end of the aerosol generating device to an upstream end of the aerosol generating device.

10. An aerosol generating device that reduces an odor of mainstream smoke, the aerosol generating device comprising:
a battery configured to supply power;
a controller configured to control an operation of the aerosol generating device;
a heater configured to heat an aerosol generating article accommodated in the aerosol generating device; and
a filtering member configured to inhale mainstream smoke exhaled by a user, filter out an odor and a toxic material from the mainstream smoke, and discharge the odor and the toxic material to the outside,
wherein the filtering member comprises:
a first flow path along which mainstream smoke before purification flows;
a second flow path along which mainstream smoke after purification flows; and
a filter unit configured to purify the mainstream smoke between the first flow path and the second flow path.
